# EUROPEAN PATENT APPLICATION

(11) **EP 3 927 093 A1**
(43) Date of publication of application: **22.12.2021**
(21) Application number: 19915498.0
(22) Date of filing: 20.06.2019
(51) Int. Cl.: H04W 74/08, H04W 72/02, H04W 72/04

(54) **TERMINAL DEVICE, BASE STATION DEVICE, COMMUNICATION METHOD, AND PROGRAM, FOR EXECUTING TWO-STEP RANDOM ACCESS PROCEDURE**

(30) Priority: 13.02.2019 US 201962805070 P
(71) Applicant: KDDI Corporation, Tokyo 163-8003 (JP)
(72) Inventor: KANNO, Issei, Fujimino-shi, Saitama 356-8502 (JP); OHSEKI, Takeo, Fujimino-shi, Saitama 356-8502 (JP); UMEHARA, Masahito, Fujimino-shi, Saitama 356-8502 (JP); SUEGARA, Yasuhiro, Fujimino-shi, Saitama 356-8502 (JP)
(74) Representative: Pitchford, James Edward
(86) International application number: PCT/JP2019/024541
(87) International publication number: WO 2020/166099

(57) **Abstract**

A terminal apparatus that establishes, on the basis of a two-step random access procedure, an initial connection with a base station apparatus by transmitting a first message to the base station apparatus and receiving a second message, which is a reply to the first message, from the base station apparatus, is provided. The first message includes a preamble to be transmitted using one sequence selected from a plurality of sequence candidates and predetermined information for initial access, each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates. The terminal apparatus, in the first message, transmits the preamble with a predetermined radio resource using the one sequence selected from the plurality of sequence candidates and transmits the predetermined information using a radio resource associated with the one selected sequence when establishing the initial connection.

## Description

### TECHNICAL FIELD

The present invention relates to a terminal apparatus, a base station apparatus, a communication method, and a program and specifically relates to radio resource utilization technology when executing a two-step random access procedure.

### BACKGROUND ART

Wireless communication system standards for Long-Term Evolution (LTE), Fifth Generation (5G) New Radio (NR), and the like are set by the 3rd Generation Partnership Project (3GPP). For LTE and NR, a random access procedure is specified for initial connection between a terminal apparatus and a base station apparatus. Conventional random access procedures include four-step processing.

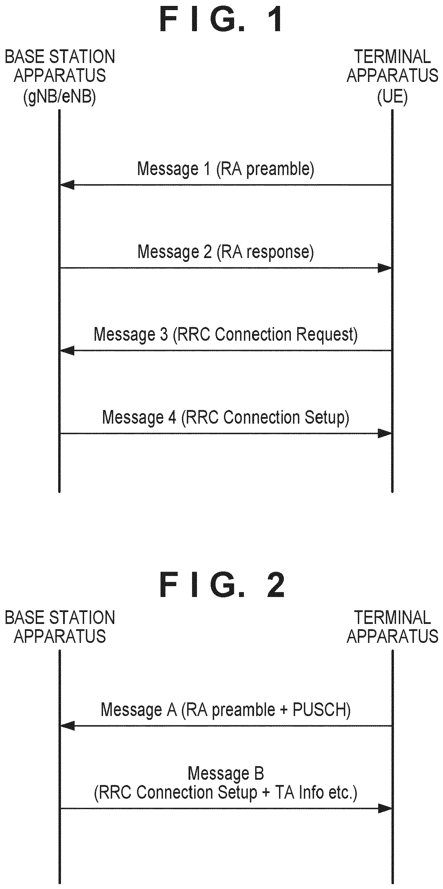

A processing example of the four-step random access procedure is illustrated in FIG. 1. In the four-step random access procedure, first, a terminal apparatus (user equipment, UE) transmits a random-access (RA) preamble as a first message (message 1) to a base station apparatus. Here, the base station apparatus is indicated by gNB in the case of NR and eNB in the case of LTE, for example. Note that the RA preamble is transmitted using predetermined radio resources (frequency and time resources). When an RA preamble is detected, the base station apparatus transmits an RA response as a second message (message 2) to the terminal apparatus. Message 2 includes information including radio resources used in transmitting a third message (message 3) and parameters for when signals are transmitted to be transmitted after the message 2 is received. Also, message 2 includes various information including timing advance (TA) for synchronizing the timings of the signals. The terminal apparatus uses the radio resources and various information designated in the information to transmit an RRC connection request message as the message 3. Via this message, predetermined information for establishing initial access is transmitted from the terminal apparatus to the base station apparatus. Also, replying to the message 3, the base station apparatus transmits an RRC connection setup message as a fourth message (message 4) to the terminal apparatus. Via this procedure, initial connection is established between the terminal apparatus and the base station apparatus.

In the 3GPP, the use of a two-step random access procedure to reduce the amount of time needed for the initial connection procedure has become a topic of investigation (see NPL 1). In a two-step random access procedure, as illustrated in FIG. 2, the terminal apparatus transmits a message A that corresponds to the message 1 and the message 3 described above and includes predetermined information for RA preamble and initial access. Also, the base station apparatus is configured to reply to the message A by transmitting a message B that corresponds to the message 2 and the message 4 described above.

### CITATION LIST

### NON PATENT LITERATURE

NPL1: 3GPP, RP-182894

### SUMMARY OF INVENTION

### TECHNICAL PROBLEM

In the four-step random access procedure, the radio resources and parameters for when signals are transmitted to be transmitted by the message 3 are designated by the message 2. However, in the two-step random access procedure, there is no such designation of radio resources and parameters for when signals are transmitted. Thus, in a case where a plurality of terminal apparatuses transmit the message A (with the RA preamble and the predetermined information linked, for example) at the same time, even if the RA preambles can be partitioned, the predetermined information may be unable to be received due to interference. In this case, because the base station apparatus does not transmit the message B, the terminal apparatus may repeatedly transmit the message A, for example, causing a long time to be needed for initial connection.

### SOLUTION TO PROBLEM

The present invention provides a method capable of efficiently executing a two-step random access procedure.

A terminal apparatus according to an aspect of the present invention includes: establishing means for, on the basis of a two-step random access procedure, establishing an initial connection with a base station apparatus by transmitting a first message to the base station apparatus and receiving a second message, which is a reply to the first message, from the base station apparatus, wherein the first message includes a preamble to be transmitted using one sequence selected from a plurality of sequence candidates and predetermined information for initial access; each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates; and the establishing means, in the first message, transmits the preamble with a predetermined radio resource using the one sequence selected from the plurality of sequence candidates and transmits the predetermined information using a radio resource associated with the one selected sequence.

A base station apparatus according to an aspect of the present invention includes: establishing means for, on the basis of a two-step random access procedure, establishing an initial connection with a terminal apparatus by receiving a first message from the terminal apparatus and transmitting a second message, which is a reply to the first message, to the terminal apparatus, wherein the first message includes a preamble to be transmitted using one sequence selected from a plurality of sequence candidates by the terminal apparatus and predetermined information for initial access; each one of the plurality of sequence candidates is associated with a radio resource to be used for transmitting the predetermined information, wherein a first radio resource associated with a first candidate of the plurality of sequence candidates being different from a second radio resource associated with a second candidate of the plurality of sequence candidates; and the establishing means, in the first message, receives the preamble via a predetermined radio resource, identifies a sequence used in transmission of the received preamble, identifies a radio resource associated with the identified sequence, and receives the predetermined information with the identified radio resource.

### ADVANTAGEOUS EFFECTS OF INVENTION

According to the present invention, a two-step random access procedure can be efficiently executed.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram schematically illustrating the flow of a four-step random access procedure.
FIG. 2 is a diagram schematically illustrating the flow of a two-step random access procedure.
FIG. 3 is a diagram illustrating an example configuration of a wireless communication system.
FIG. 4 is a diagram illustrating an example of information including, in a message A, sequences for preamble transmission and sets of radio resources to be used in PUSCH associated together.
FIG. 5 is a diagram schematically illustrating radio resources to be used for message A in a two-step random access procedure.
FIG. 6 is a diagram illustrating an example of information including, in a message A, sequences for preamble transmission and sets of radio resources to be used in PUSCH associated together.
FIG. 7 is a diagram illustrating an example of the hardware configuration of a base station apparatus and a terminal apparatus.
FIG. 8 is a diagram illustrating an example of the functional configuration of a terminal apparatus.
FIG. 9 is a diagram illustrating an example of the functional configuration of a base station apparatus.
FIG. 10 is a diagram illustrating an example of the flow of processing executed by a terminal apparatus.
FIG. 11 is a diagram illustrating an example of the flow of processing executed by a base station apparatus.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### System Configuration

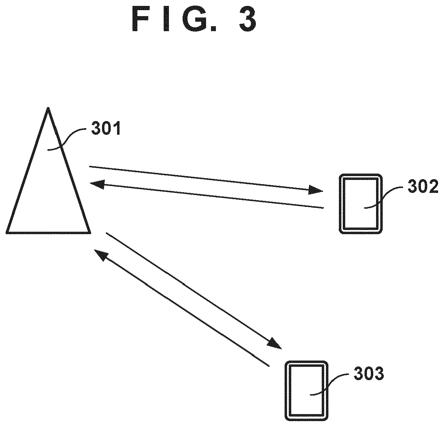

FIG. 3 is a diagram illustrating an example configuration of a wireless communication system according to the present embodiment. The system of the present embodiment is an example of a 5G cellular communication system. However, no such limitation is intended, and the system of the present embodiment may be a cellular communication system of a 5G successor or a non-cellular wireless communication system. The system of the present embodiment includes a base station apparatus 301, a terminal apparatus 302, and a terminal apparatus 303. Note that in FIG. 3, to facilitate understanding, only one base station apparatus and two terminal apparatuses are illustrated. However, the numbers of the apparatuses is not limited thereto, and more base station apparatuses and terminal apparatuses may be present or only one terminal apparatus may be present.

The terminal apparatus 302 and the terminal apparatus 303 according to the present embodiment execute a two-step random access procedure (hereinafter, this procedure is referred to as "two-step RACH") such as that illustrated in FIG. 2 to establish a connection with the base station apparatus 301. As described above, in the two-step RACH, the terminal apparatus transmits a message A including a preamble and predetermined information for initial access to the base station apparatus.

The terminal apparatus selects a preamble from a plurality of sequence candidates and transmits the preamble. Note that in a case where a plurality of terminal apparatuses select different sequence candidates from different candidates thereof and preambles are simultaneously transmitted using the sequences, the plurality of sequence candidates are determined so that the base station apparatus can partition the preambles, i.e., to sufficiently reduce cross correlation or have orthogonal sequences. For example, the plurality of sequence candidates are reported from the base station apparatus to the terminal apparatus. For example, the base station apparatus prepares a plurality of sequence candidates and reports the plurality of sequence candidates to the terminal apparatus within its cell so that a sequence able to be used by a terminal apparatus in an adjacent cell is not used in the cell it forms. By the plurality of sequence candidates being selected in this manner, interference caused by a preamble from a terminal apparatus in an adjacent cell interfering with the preamble from the terminal apparatus within the cell of the base station apparatus can be prevented. Note that, the base station apparatus reports, to a terminal apparatus within the range of the cell formed by the base station apparatus, information designating the radio resources (frequency and time resources) permitted to be used for the terminal apparatus to transmit a preamble. Note that, for example, a plurality of sequence candidates able to be used for preamble transmission, information designating the radio resources able to be used to transmit a preamble, and the like may be simultaneously reported from the base station apparatus to one or more terminal apparatuses via a broadcast signal.

The terminal apparatus transmits predetermined information for initial access to the base station apparatus via a physical uplink shared channel (PUSCH), for example. Note that that in this example, PUSCH is a PUSCH included in the message A and thus should be written as "Message A PUSCH", however, in the present embodiment, to simplify notation, it will be simply written as "PUSCH". PUSCH, in terms of its simplest configuration, can be transmitted continuously in time with the preamble (directly after the preamble) in the same frequency range as the preamble. Note that the radio resources (time and frequency resources) for transmitting the preamble are limited. Thus, without loss of generality, it is expected that a plurality of terminal apparatuses transmit a preamble at the same time using predetermined radio resources for preamble. Also, in this case, with the simple configuration described above, PUSCH is transmitted by the plurality of terminal apparatuses using shared radio resources (radio resources having a time interval continuous in time with the predetermined radio resources and a frequency range the same as the predetermined radio resources. On the other hand, for PUSCH, control to suppress cross correlation between a plurality of terminal apparatuses to a low degree cannot be performed. Thus, PUSCHs transmitted from a plurality of terminal apparatuses at the same time with the same frequency resources interfere with one another, making it difficult for the base station apparatus to correctly decode the PUSCHs. Interference between PUSCHs can be prevented by transmitting PUSCHs using random radio resources, however, this makes it difficult for the base station apparatus to know which terminal apparatus is using which radio resource.

In the present embodiment, different radio resources are associated, as radio resources for transmitting predetermined information for initial access, to each of the plurality of sequence candidates able to be used for preamble transmission. In other words, a first radio resource associated with a first candidate sequence and a second radio resource associated with a second candidate sequence are made different, and, in a case where the sequence to be used for transmitting a preamble is different, a different radio resource is used for transmitting predetermined information. In this manner, even in a case where a plurality of terminal apparatuses transmit a preamble at the same time, if sequences of different preambles are selected, the radio resources used to transmit PUSCH are different. This helps to minimize or prevent interference between the PUSCHs. The radio resources relate to at least one of a time resource, a frequency resource, or a demodulation reference signal (DMRS) port. In other words, for example, the first radio resource associated with the first candidate sequence is different from the second radio resource associated with the second candidate sequence in terms of at least one of the time resource, the frequency resource, or the DMRS port. Note that herein, "radio resource" can be referred to as one set of radio resources specified by a combination of time, frequency, and space (DMRS port), for example. However, in the present embodiment and the scope of the claims, one set of radio resources is written as "one radio resource", for example.

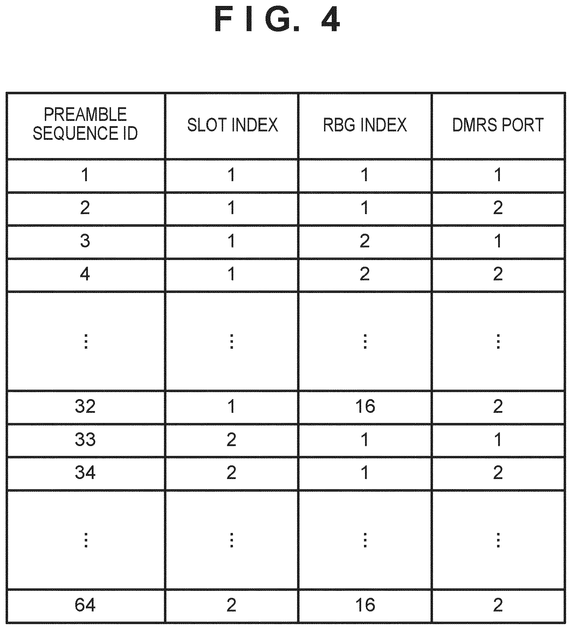

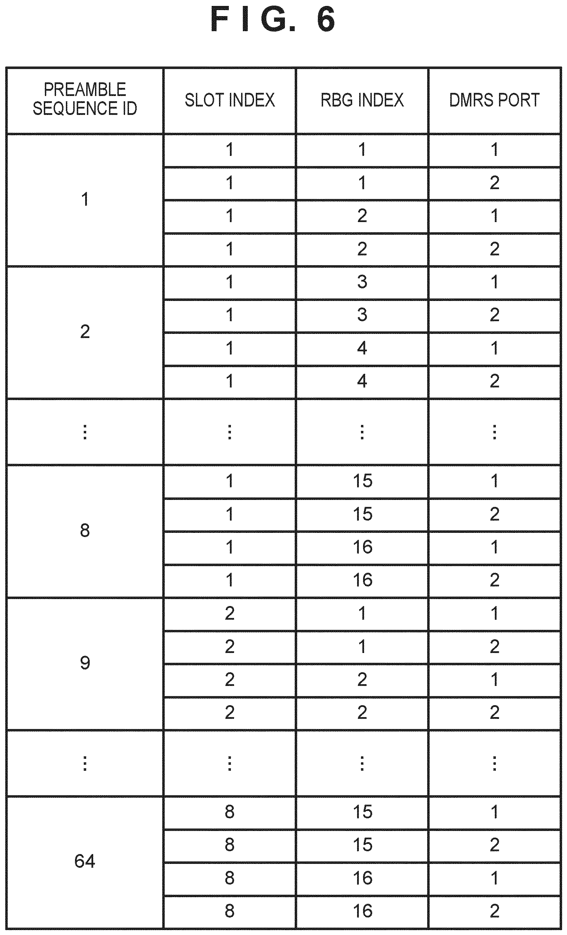

FIG. 4 is a diagram illustrating an example of the relationship between sequence candidates and the radio resources to be used for transmission of a PUSCH associated with each candidate. This information including sequence candidates and radio resources associated together is shared in advance between the base station apparatus and the terminal apparatus. For example, when the base station apparatus is installed or when the terminal apparatus is shipped, information such as that illustrated in FIG. 4 may be stored in these apparatuses. Also, the information such as that illustrated in FIG. 4 may be reported to the terminal apparatus by the base station apparatus via a broadcast signal or the like. Note that the information in FIG. 4 is an example, and information such as that illustrated in FIG. 6 described below or information including the sequence candidates and the radio resource associated in a different manner may be shared between the base station apparatus and the terminal apparatus. As illustrated in FIG. 4, a preamble ID is a number for identifying a sequence candidate. Slot index indicates an index of time resources (time slot, mini-slot, and the like). For example, a value of "1" indicates that a time slot directly after preamble transmission is used, and a value of "2" indicates that PUSCH transmission is performed after one time slot (or mini-slot) has passed. RBG index indicates an index of frequency resources (resource block group, RBG), with each number designating a range of resource blocks that do not (at least partially) overlap. Also, DMRS port designates the positional pattern of the time and frequency at which a reference signal is transmitted. Because two or more terminal apparatuses use DMRS ports that are different, the communication with the base station apparatus and with the terminal apparatuses can be spatially partitioned. In other words, in the example of FIG. 4, differing sequences are associated with radio resources which differ at least in terms of one of time, frequency, or space. Note that, for each sequence candidate, in addition to or instead of time, frequency, and space, the radio resources for PUSCH may be set such that power (code) or another factor is made different.

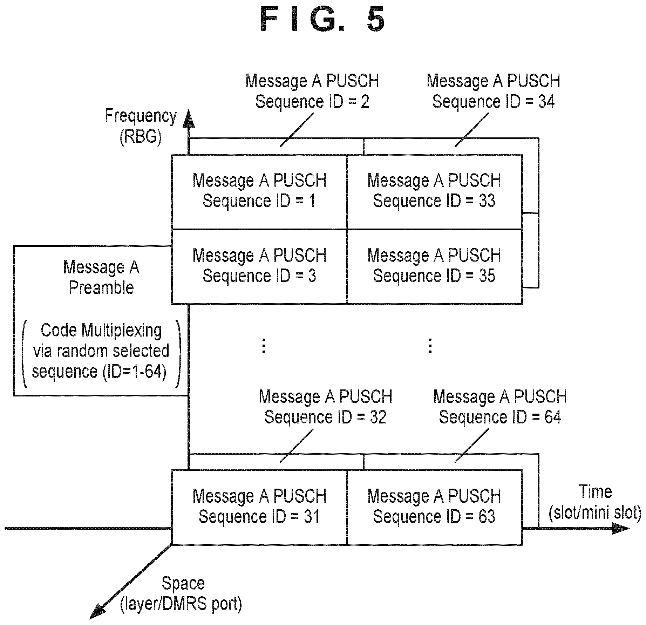

FIG. 5 is a diagram illustrating an example of a preamble and PUSCH transmitted in a case where the relationship between the sequences for preamble transmission and the radio resources illustrated in FIG. 4 are used. In FIG. 5, the horizontal axis represents time, the vertical axis represents frequency, and the depth direction axis represents space. The terminal apparatus selects a sequence to be used to transmit a preamble from a plurality of candidates. In this example, the plurality of candidates have a value from 1 to 64 that represents their preamble sequence ID. Note that these values are examples, and a different range of ID values may be used. Note that the terminal apparatus may acquire the information of the usable sequence candidates from the base station apparatus (via a broadcast signal or the like). The base station apparatus may, for example, report to the terminal apparatus that from among the sequences illustrated in FIG. 4 with a sequence ID from 1 to 64, sequences with an ID from 1 to 8 are usable. Also, for example, the base station apparatus may select 64 preambles from a group of preamble sequences including more than 64 preamble sequences and report these to the terminal apparatus as the plurality of candidates for the preamble sequence. The terminal apparatus uses the sequence selected from the plurality of candidates to transmit a preamble using predetermined frequency and time resources. In this example, the terminal apparatus can know the predetermined frequency and time resources used to transmit the preamble on the basis of a signal broadcast from the base station apparatus in advance, for example. The frequency and time resources here are radio resources shared and used in a case where a plurality of terminal apparatuses execute a random access procedure, and each of the plurality of terminal apparatuses transmits a preamble using the selected sequences. Accordingly, the base station apparatus receives preambles from the plurality of terminal apparatuses at the same time. Here, the preambles are code-multiplexed using sequences that are orthogonal or have low cross correlation, and the preambles are transmitted. Thus, using the sequences, the base station apparatus can partition the signals transmitted from the plurality of terminal apparatuses using the different sequences. Also, the base station apparatus can identify which sequence each terminal apparatus is using to transmit a preamble via the sequence used when partitioning the preambles.

The terminal apparatus transmits a PUSCH following the preamble within a single message (the message A). At this time, the terminal apparatus identifies the radio resources selected for preamble transmission and performs control to transmit the PUSCH using the radio resources. For example, referring to FIG. 4, in a case where the sequence selected for preamble transmission has an ID of from 1 to 32, because the slot index is "1", the PUSCH is transmitted in the time slot directly after the preamble. On the other hand, in a case where the sequence selected for preamble transmission has an ID of from 33 to 64, because the slot index is "2", the PUSCH is transmitted in the time slot after the PUSCH transmission with an ID of from 1 to 32. Also, for sequences with an ID of 1 or 2 and 33 and 34, because the corresponding RBG index is "1", these IDs correspond to a common frequency resource (RBG). In a similar manner, for sequences with an ID of 3 and 4 and 35 and 36, because the corresponding RBG index is "2", in this example, the sequences correspond to the RBG adjacent to the RBG with an RBG index of "1". In this manner, sequences with an ID equaling 2n - 1 to 2n and 2n + 31 to 2n + 32 (where 1 ≤ n ≤ 16) correspond to a shared frequency resource (RBG with an RBG index of "n") and the corresponding frequency resource are different when n is different. Also, sequences with an ID equaling 2m - 1 (where m satisfies 1 ≤ n ≤ 16) and sequences with an ID equaling 2m correspond to different DMRS ports, and the base station apparatus can spatially partition the PUSCHs corresponding to these sequences. In this manner, for the radio resources for each of the sequences with an ID ranging from 1 to 64, sequence IDs are associated with radio resources such that the radio resources for sequences with a different ID differs in terms of at least one of time, frequency, or space.

The base station apparatus detects a preamble transmitted from one or more terminal apparatuses from the messages A from the terminal apparatuses and identifies the sequences used by the terminal apparatuses. For example, the base station apparatus executes preamble detection processing for the time and frequency resources for preamble set by the base station apparatus and reported to the terminal apparatuses. Next, the base station apparatus identifies the radio resources for PUSCH corresponding to the sequence used in the transmission of each detected preamble. Then, the base station apparatus executes PUSCH reception processing using the identified radio resources. For example, in a case where the preamble from a first terminal apparatus is determined to have been transmitted using a sequence with an ID of 1, the base station apparatus executes reception processing for the corresponding PUSCH using the radio resources with a slot index of " 1", an RBG index of " 1", and a DMRS port of " 1". Also, in a case where the preamble from a second terminal apparatus is determined to have been transmitted using a sequence with an ID of 64, the base station apparatus executes reception processing for the corresponding PUSCH using the radio resources with a slot index of "2", an RBG index of "16", and a DMRS port of "2". In this manner, because the sequences used in transmitting the preamble via the message A are different, the radio resources used in transmitting PUSCH in the same message A are dispersed. Thus, as long as the plurality of terminal apparatuses select different sequences, interference of PUSCHs transmitted by the terminal apparatuses can be minimized or prevented. Also, in the base station apparatus, the detection accuracy of the message A of two-step RACH can be improved, and frequency at which the terminal apparatus resends the message A can be reduced. As a result, the time taken for an initial connection between the terminal apparatus and the base station apparatus to be established can be reduced.

Note that, the PUSCH reception processing includes channel estimation via the DMRS corresponding to the used DMRS port and PUSCH demodulation and decoding based on the estimation value. Note that in a case where there is one DMRS port for the identified time resources (time index) and frequency resources (RBG index), the base station apparatus demodulates and decodes one PUSCH on the basis of a channel estimation using the DMRS corresponding to this DMRS port. On the other hand, in a case where a plurality of DMRS ports are used for the identified time and frequency resources, the base station apparatus executes channel estimation for each port and demodulates and decodes a plurality of PUSCHs corresponding to the channel estimation values. Note that the base station apparatus includes a plurality of reception antennas and is capable of partitioning the spatially multiplexed PUSCH and demodulating and decoding these in a similar manner to a conventional uplink multi-user (MU) multiple-input and multiple-output (MIMO) method. Also, after demodulation and decoding of a plurality of PUSCHs using successive interference cancellation is successful, the base station apparatus may generate a PUSCH replica signal on the basis of the decoding result and the channel estimation value, removing it from the reception signal, then demodulating and decoding another PUSCH included in the reception signal. Note that in a case where successive interference cancellation is used, the base station apparatus may not include a plurality of reception antennas.

Note that in the example described above, information for identifying one radio resource is associated with one sequence used in preamble transmission. However, information for identifying a plurality of radio resources may be associated with one sequence. FIG. 6 is a diagram illustrating the corresponding relationship between the sequence ID and the radio resource in this example. In the example illustrated in FIG. 6, one ID is associated with four patterns of radio resources. Note that in FIG. 6, because one ID is associated with four patterns of radio resources, eight time slots are used, 16 RBG numbers are used, and two DMRS ports are used. However, no such limitation is intended. For example, four time slots may be used, 32 RBG numbers may be used, and two DMRS ports may be used. Note that the number of patterns of the radio resources associated to one ID is not limited to four, and the number of associated patterns of radio resources may be a discretionary number of 2 or more. Also, associated to a plurality of IDs may be a number of patterns of radio resources greater than the number of IDs, for example, three patterns of radio resources may be associated with two IDs. Accordingly, within limited radio resources, the flexibility of the radio resources used can be increased, and the radio resources to be used by a plurality of terminal apparatuses for PUSCH transmission can be dispersed.

The terminal apparatus selects a sequence to be used for preamble transmission from a plurality of sequence candidates, selects one radio resource as a radio resource for PUSCH transmission from among the plurality of patterns of radio resources corresponding to the selected sequence, and generates and transmits the message A on the basis of the selected result. Note that the terminal apparatus may select one radio resource at random from the plurality of patterns of radio resources, or may select one radio resource on the basis of a predetermined rule using the identification number of the terminal apparatus (or the member identification module), for example. The base station apparatus detects the preamble from the message A and identifies the sequence used. Then, the base station apparatus determines which of the plurality of patterns of radio resources corresponding to the sequence used the PUSCH was transmitted by. For example, the base station apparatus determines whether or not a signal is included in the plurality of patterns of radio resources corresponding to the sequence used via power detection. For example, in a case where the preamble from a first terminal apparatus is determined to have been transmitted using a sequence with an ID of 1, the base station apparatus executes power detection for radio resources with a slot index of "1", an RBG index of "1" and "2", and a DMRS port of "1" and "2". Also, in a case where the preamble from a second terminal apparatus is determined to have been transmitted using a sequence with an ID of 64, the base station apparatus executes power detection for radio resources with a slot index of "8", an RBG index of "15" and "16", and a DMRS port of "1" and "2". Then, the base station apparatus determines that a PUSCH has been transmitted using radio resources, from among these radio resources, in which the detected power is greater than a predetermined value and executes PUSCH reception processing using the radio resources. For example, the base station apparatus executes power detection of the plurality of DMRS ports for the frequency and time resources corresponding to the identified sequence and executes channel estimation for the DMRS ports with a DMRS reception power equal to or greater than a predetermined value. Note that in a case where reception power greater than the predetermined value is detected in a plurality of DMRS ports with the same frequency and time resources, the base station apparatus determines that PUSCHs have been transmitted from a plurality of terminal apparatuses using different DMRS ports and uses spatial partitioning or successive interference cancellation to partition and extract the PUSCHs from the plurality of terminal apparatuses. Note that using power detection is merely an example, and another method may be used to identify the radio resources used for PUSCH. For example, the base station apparatus may execute reception processing using the plurality of radio resources associated with the sequence determined to be used in preamble transmission and determine that the radio resources successful in PUSCH demodulation and decoding have been selected for PUSCH transmission.

In this manner, a plurality of radio resources are associated with one sequence, and the terminal apparatus determines the radio resource to use from the plurality of radio resources. Thus, even in a case where a plurality of terminal apparatuses transmit a preamble using the same sequence, the probability of a PUSCH being transmitted using the same radio resources can be reduced. Accordingly, in the base station apparatus, the detection accuracy of the message A of two-step RACH can be improved, and frequency at which the terminal apparatus resends the message A can be reduced. As a result, the time taken for an initial connection between the terminal apparatus and the base station apparatus to be established can be reduced.

Note that associated to two or more IDS may be two or less patterns of radio resources, for example, two or one radio resource pattern may be associated with two IDs. This helps prevent patterns of radio resources for PUSCH being unnecessarily prepared in a case where the number of terminal apparatuses attempting to connect is low, thus allowing the burden on the base station apparatus to be reduced.

The information for identifying the radio resources corresponding to the ID of the sequence used in preamble transmission is not limited to the format described herein and the radio resources may be designated using various methods.

For example, in the example described above, the time resources are represented by a slot number (slot index) offset from the time slot for preamble transmission. However, this may be represented by a start symbol index of the time interval corresponding to the time resource. In other words, a way of representing not based on the time slot for preamble transmission may be used. Also, an end symbol index relating to the end time of the time interval corresponding to the time resource may be used. Note that both a start symbol index and an end symbol index may be used, and, in a case where the duration of the time resource is set in advance to be fixed, only one may be used. Furthermore, the time resource may be represented by a numerical value indicating the time difference from the start timing of preamble transmission. Also, in the example described above, the time interval corresponding to the time resource is identified using a slot (or mini-slot) as the unit. However, for example, the time resource may be represented by at least one of information indicating the start time of the time interval or the information indicating the end time (based on the start timing of preamble transmission). Furthermore, information indicating the duration of the time interval together with at least one of the start time or the end time may be used to represent the time resource. Also, in the example described above, the frequency resource is designated using a resource block group set in advance as the unit. However, no such limitation is intended. For example, the frequency resource may be designated by an index of resource blocks corresponding to the lower end or upper end of the frequency resource and the number of resource blocks used. Furthermore, an index of resource blocks corresponding to the lower end of the frequency resource and an index of resource blocks corresponding to the upper end may be used as the information for designating the frequency resource.

Note that in the present embodiment, the initial connection processing when connecting to the base station apparatus 301 with the terminal apparatus 302 and the terminal apparatus 303 are both not connected to the base station apparatus 301 has been described. This is because, upon handover, the terminal apparatus 302 and the terminal apparatus 303, for example, the resources to be used via the base station apparatus of the handover source are designated, allowing PUSCH of the message A to be transmitted in a state of no (or sufficiently low) interference. However, no such limitation is intended, and the processing described above may be executed in a case other than initial access, such as handover and the like.

### Apparatus Configuration

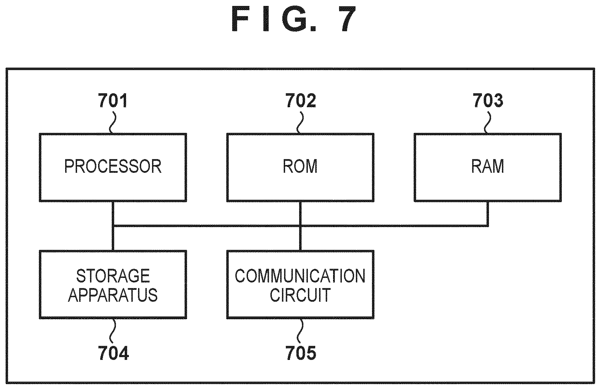

Next, the configuration of the terminal apparatus and the base station apparatus that executes the processing described above will be described. FIG. 7 is a diagram illustrating an example of the hardware configuration of the terminal apparatus and the base station apparatus. The terminal apparatus and the base station apparatus, for example, include a processor 701, ROM 702, RAM 703, a storage apparatus 704, and a communication circuit 705. In the terminal apparatus, for example, a program for implementing the functions of the terminal apparatus described above, for example, stored in the ROM 702, the RAM 703, or the storage apparatus 704 is executed by the processor 701. In a similar manner, in the base station apparatus, a program for implementing the functions of the base station apparatus described above, for example, stored in the ROM 702, the RAM 703, or the storage apparatus 704 is executed by the processor 701. Note that the processor 701 may be substituted by one or more processors including a central processing unit (CPU), an application specific integrated circuit (ASIC), a field-programmable gate array (FPGA), a digital signal processor (DSP), and the like.

The terminal apparatus and the base station apparatus control the communication circuit 705 via the processor 701, for example, and communicate with the partner apparatus (for example, in the case of the terminal apparatus, the base station apparatus, and in the case of the base station apparatus, the terminal apparatus or a network node). Note that in FIG. 7, the terminal apparatus and the base station apparatus are schematically illustrated including a single communication circuit 705. However, no such limitation is intended. For example, the terminal apparatus may include a communication circuit for communication with the base station apparatus and a communication circuit for communication with a wireless LAN or the like. Also, for example, the base station apparatus may include a communication circuit for communication with the terminal apparatus and a communication circuit for communication with a network node.

Note that the terminal apparatus and the base station apparatus may be provided with dedicated hardware for executing the functions. Alternatively, a portion of the functions may be executed by the hardware and the other portion may be executed by a computer running a program. Also, all functions may be executed by a computer and a program.

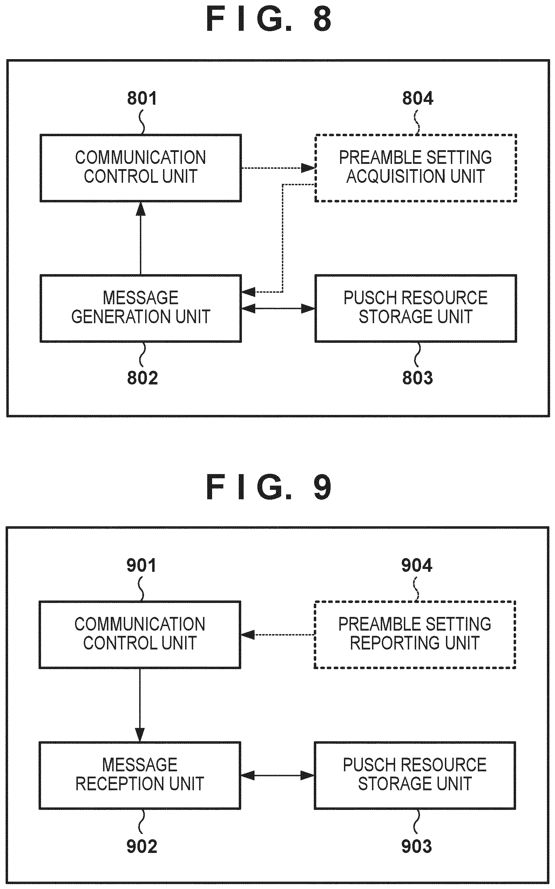

FIG. 8 is a diagram illustrating an example of the functional configuration of the terminal apparatus. The functions illustrated in FIG. 8 are implemented by the processor 701 of the terminal apparatus executing a program stored in the ROM 702, the RAM 703, or the storage apparatus 704. Note that the terminal apparatus may include hardware corresponding to at least one of the functions described below. Note that in FIG. 8, the functional units, from among the functions of the terminal apparatus, that are particularly related to the present embodiment are selectively illustrated, and it goes without saying that the terminal apparatus has the functions of a typical terminal apparatus.

The terminal apparatus includes as functions a communication control unit 801, a message generation unit 802, and a PUSCH resource storage unit 803. Also, the terminal apparatus may optionally include a preamble setting acquisition unit 804.

The communication control unit 801 controls the communication (wireless communication compliant with 5G communication standards, for example) performed between the terminal apparatus and the base station apparatus. The communication control unit 801, for example, acquires the information sent from the base station apparatus and executes control to execute two-step RACH on the basis of this information, establish a connection with the base station apparatus, and perform communication. The message generation unit 802 generates the message A of the two-step RACH as described above. The operations of the message generation unit 802 will be described below. The PUSCH resource storage unit 803 stores information including a plurality of sequence candidates able to be used for the preamble portion of the message A and radio resources to be used for transmission of the PUSCH portion of the message A associated together. The preamble setting acquisition unit 804 acquires various pieces of information relating to the preamble from the base station apparatus. The preamble setting acquisition unit 804, for example, acquires, from the base station apparatus, information for identifying the predetermined radio resources (frequency and time resources) to be used for transmitting the preamble portion. The message generation unit 802 adjusts the frequency of the preamble portion so that the preamble portion is transmitted with the acquired frequency resource or outputs the generated message A to the communication control unit 801 so that the preamble portion is transmitted with the acquired time resources. Also, the preamble setting acquisition unit 804, for example, may acquire the information for designating the sequence able to be used for transmitting the preamble portion from the base station apparatus. Furthermore, the preamble setting acquisition unit 804, for example, may acquire the information for designating the radio resources to be used for transmitting the PUSCH portion for each sequence able to be used for transmitting the preamble portion. Note that in a case where the terminal apparatus acquires the information in advance, the preamble setting acquisition unit 804 does not need to re-acquire the information.

The message generation unit 802 selects one from the plurality of sequences able to be used for preamble transmission and uses the selected sequence to generate the preamble portion of the message A. Also, the message generation unit 802 acquires, from the PUSCH resource storage unit 803, the information of the radio resources, such as the time (for example, time slot/mini-slot), frequency (for example, RBG), and space (for example, DMRS port), associated with the selected sequence. Note that in a case where a plurality of radio resources are associated with the selected sequence, the message generation unit 802 selects one (or in some cases, two or more) radio resources from the plurality of radio resources. Then, the message generation unit 802 generates a PUSCH for transferring the predetermined information for initial access to the base station apparatus. Here, the message generation unit 802 adjusts the PUSCH frequency, timing, DMRS, and the like so that the radio resources corresponding to the sequence selected when generating the preamble portion are used for transmission. The message generation unit 802, as described above, generates the message A including the preamble portion and the PUSCH portion and transmits the message A to the base station apparatus via the communication control unit 801.

FIG. 9 is a diagram illustrating an example of the functional configuration of the base station apparatus. The functions illustrated in FIG. 9 are implemented by the processor 701 of the terminal apparatus executing a program stored in the ROM 702, the RAM 703, or the storage apparatus 704. Note that the base station apparatus may include hardware corresponding to at least one of the functions described below. Note that in FIG. 9, the functional units, from among the functions of the base station apparatus, which are particularly related to the present embodiment are selectively illustrated, and it goes without saying that the base station apparatus has the functions of a typical base station apparatus.

The base station apparatus includes as functions a communication control unit 901, a message reception unit 902, and a PUSCH resource storage unit 903. Also, the base station apparatus may optionally include a preamble setting reporting unit 904. The communication control unit 901 controls the communication (wireless communication compliant with 5G communication standards, for example) performed between the terminal apparatus and the base station apparatus.

The communication control unit 901 controls the communication (wireless communication compliant with 5G communication standards, for example) performed between the base station apparatus and the terminal apparatus. The communication control unit 901, for example, executes control to establish a connection with the terminal apparatus executing two-step RACH on the basis of the information sent by the base station apparatus and perform communication. The message reception unit 902 executes reception processing of the message A of the two-step RACH. The operations of the message reception unit 902 will be described below. In a case where the reception of the message reception unit 902 by the message reception unit 902 is successful, the communication control unit 901 transmits the message B to the terminal apparatus which is the transmission source of the message A and establishes a connection with the terminal apparatus. The PUSCH resource storage unit 903, in a similar manner to the PUSCH resource storage unit 803 of the terminal apparatus, stores information including a plurality of sequence candidates able to be used for the preamble portion of the message A and radio resources to be used for transmission of the PUSCH portion of the message A associated together. The preamble setting reporting unit 904 reports various pieces of information relating to the preamble to the terminal apparatus. The preamble setting reporting unit 904, for example, reports, to the terminal apparatus, information for identifying the predetermined radio resources (frequency and time resources) to be used for transmitting the preamble portion. Also, the preamble setting reporting unit 904, for example, may report the information for designating the sequence able to be used for transmitting the preamble portion to the terminal apparatus. Furthermore, the preamble setting reporting unit 904, for example, may report, to the terminal apparatus, the information for designating the radio resources to be used for transmitting the PUSCH portion for each sequence able to be used for transmitting the preamble portion. Note that in a case where the terminal apparatus acquires the information in advance, the preamble setting reporting unit 904 does not need to re-report the information.

The message reception unit 902, with the radio resources able to be used for transmitting the preamble portion of the message A, uses the sequence able to be used for transmitting the preamble and executes detection processing of the preamble portion. In a case where the preamble portion can be detected using one or more sequences from among the usable sequence candidates, the message reception unit 902 then extracts, from the PUSCH resource storage unit 903, the radio resources for the PUSCH associated with the sequence used for detecting the preamble portion. Then, the message reception unit 902 executes reception processing for PUSCH with the radio resources extracted from the PUSCH resource storage unit 903. Note that in a case where a plurality of radio resources are associated with one sequence, the message reception unit 902, for example, executes power detection processing for each one of the plurality of radio resources and determines the radio resource transmitting the PUSCH. Then, the message reception unit 902 executes reception processing for PUSCH with the radio resource determined to be transmitting the PUSCH.

### Processing Flow

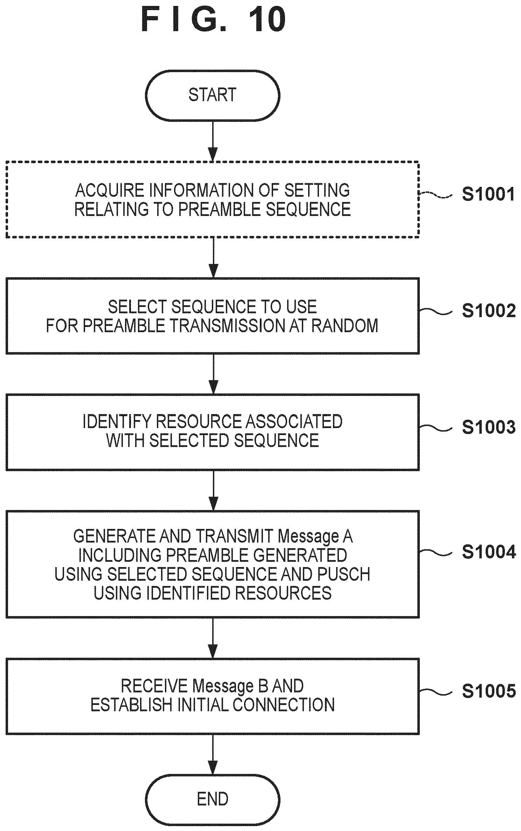

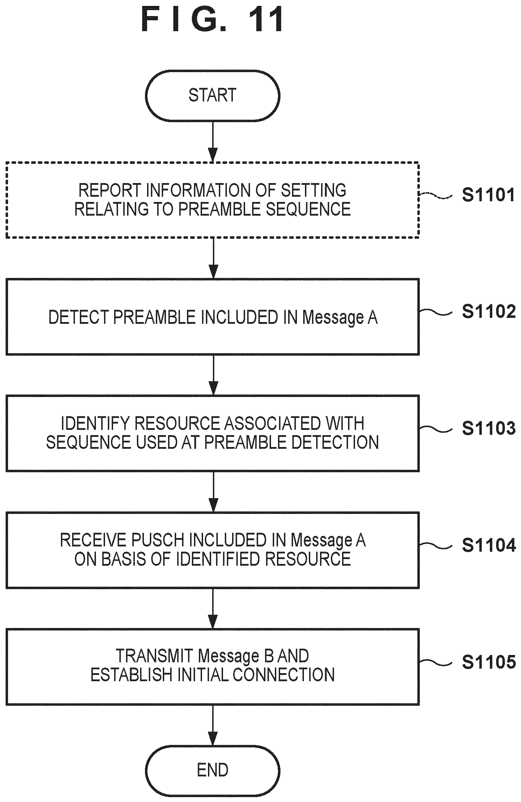

Next, an example of the flow of the processing executed by the terminal apparatus and the base station apparatus will be described using FIGS. 10 and 11. FIG. 10 is a diagram illustrating an example of the flow of the processing executed by the terminal apparatus, and FIG. 11 is a diagram illustrating an example of the flow of the processing executed by the base station apparatus.

The base station apparatus, for example, reports to the terminal apparatus, as necessary, the information indicating at least one of the frequency and time resources able to be used for transmitting the preamble portion of the message A, the sequence candidates able to be used, or the radio resources able to be used for transmitting a PUSCH corresponding to the sequence candidate (step S1001, step S1101). Note that the reporting is performed using a broadcast signal, for example. Also, in a case where the terminal apparatus stores the information in advance, this processing may be omitted.

The terminal apparatus selects (step S1002) a sequence to use for preamble transmission at random from the sequence candidates able to be used and identifies (step S1003) the radio resource for PUSCH transmission associated with the selected sequence. Then, the terminal apparatus generates and transmits (step S1004) the message A of two-step RACH including the preamble generated using the sequence selected in step S1002 and the PUSCH using the radio resources identified in step S1003. The base station apparatus monitors the time and frequency resources able to be used for transmitting the preamble portion and detects (step S1102) the preamble portion of the message A from the terminal apparatus using the plurality of usable sequence candidates. Then, the base station apparatus identifies the sequence used when the preamble portion is detected, identifies (step S 1103) the radio resource for PUSCH transmission associated with the sequence, and executes (step S 1104) reception processing of PUSCH on the basis of the identified radio resource. When PUSCH reception processing is successful, the base station apparatus transmits (step S1105) the message B to the terminal apparatus which is the transmission source of the message A, and the terminal apparatus receives (step S 1005) the message B. In this manner, a connection is established between the base station apparatus and the terminal apparatus.

As described above, the terminal apparatus is configured such that each one of the plurality of sequences able to be used for transmitting the preamble of the message A is set with a different radio resource to be used in the PUSCH transmission of the message A. Thus, in a case where a plurality of terminal apparatuses use different sequences to each transmit a preamble of the message A, interference between the PUSCHs of the message A can be prevented. As a result, the probability of the base station apparatus failing to receive the PUSCHS can be reduced, and the probability of two-step RACH succeeding can be increased. Also, in a case where a plurality of radio resources are associated with one sequence, even when there are a plurality of terminal apparatuses using the same sequence to transmit a preamble, the probability of the base station apparatus successfully receiving the PUSCHs can be improved. Thus, the probability of the terminal apparatus needing to resend the message A can be reduced, and the time taken to establish a connection can be reduced.

The present invention is not limited to the above embodiments and various changes and modifications can be made within the spirit and scope of the present invention. Therefore, to apprise the public of the scope of the present invention, the following claims are made.

The present application claims priority from U.S. provisional patent application No. 62/805070 filed on February 13, 2019, which is hereby incorporated by reference herein.

## Claims

1. A terminal apparatus, **characterized by** comprising:
establishing means for, on the basis of a two-step random access procedure, establishing an initial connection with a base station apparatus by transmitting a first message to the base station apparatus and receiving a second message, which is a reply to the first message, from the base station apparatus,
wherein the first message includes a preamble to be transmitted using one sequence selected from a plurality of sequence candidates and predetermined information for initial access;
each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates; and
the establishing means, in the first message, transmits the preamble with a predetermined radio resource using the one sequence selected from the plurality of sequence candidates and transmits the predetermined information using a radio resource associated with the one selected sequence.

2. The terminal apparatus according to claim 1, **characterized in that**
at least one of the plurality of sequence candidates is associated with a plurality of radio resources, and
the establishing means selects one radio resource from the plurality of radio resources associated with a sequence selected from the plurality of sequence candidates and transmits the predetermined information using the selected radio resource.

3. The terminal apparatus according to claim 2, **characterized in that**
the plurality of radio resources associated with one candidate of the plurality of sequence candidates are different from a radio resource associated with another candidate of the plurality of sequence candidates.

4. The terminal apparatus according to any one of claims 1 to 3, **characterized in that**
the first radio resource associated with the first candidate, compared to the second radio resource associated with the second candidate, includes at least one of a different time resource, a different frequency resource, or a different demodulation reference signal port.

5. The terminal apparatus according to any one of claims 1 to 4, **characterized by** further comprising
acquiring means for acquiring information indicating the plurality of sequence candidates from the base station apparatus.

6. A base station apparatus, **characterized by** comprising:
establishing means for, on the basis of a two-step random access procedure, establishing an initial connection with a terminal apparatus by receiving a first message from the terminal apparatus and transmitting a second message, which is a reply to the first message, to the terminal apparatus,
wherein the first message includes a preamble to be transmitted using one sequence selected from a plurality of sequence candidates by the terminal apparatus and predetermined information for initial access;
each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates; and
the establishing means, in the first message, receives the preamble via a predetermined radio resource, identifies a sequence used in transmission of the received preamble, identifies a radio resource associated with the identified sequence, and receives the predetermined information with the identified radio resource.

7. The base station apparatus according to claim 6, **characterized in that**
at least one of the plurality of sequence candidates is associated with a plurality of radio resources, and
the establishing means, in the first message, determines whether the predetermined information has been transmitted for each one of the plurality of radio resources associated with the sequence used for transmitting the received preamble and executes reception processing of the predetermined information with a radio resource for which transmission of the predetermined information has been determined.

8. The base station apparatus according to claim 7, **characterized in that**
the plurality of radio resources associated with one candidate of the plurality of sequence candidates are different from a radio resource associated with another candidate of the plurality of sequence candidates.

9. The base station apparatus according to any one of claims 6 to 8, **characterized in that**
the first radio resource associated with the first candidate, compared to the second radio resource associated with the second candidate, includes at least one of a different time resource, a different frequency resource, or a different demodulation reference signal port.

10. The base station apparatus according to any one of claims 6 to 9, **characterized by** further comprising
reporting means for reporting information indicating the plurality of sequence candidates to the terminal apparatus.

11. A communication method executed by a terminal apparatus, **characterized by** comprising:
on the basis of a two-step random access procedure, establishing an initial connection with a base station apparatus by transmitting a first message to the base station apparatus and receiving a second message, which is a reply to the first message, from the base station apparatus,
wherein the first message includes a preamble to be transmitted using one sequence selected from a plurality of sequence candidates and predetermined information for initial access;
each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates; and
the establishing includes, in the first message, transmitting the preamble with a predetermined radio resource using the one sequence selected from the plurality of sequence candidates and transmitting the predetermined information using a radio resource associated with the one selected sequence.

12. A communication method executed by a base station apparatus, **characterized by** comprising:
on the basis of a two-step random access procedure, establishing an initial connection with a terminal apparatus by receiving a first message from the terminal apparatus and transmitting a second message, which is a reply to the first message, to the terminal apparatus,
wherein the first message includes a preamble to be transmitted using one sequence selected from a plurality of sequence candidates by the terminal apparatus and predetermined information for initial access;
each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates; and
the establishing includes, in the first message, receiving the preamble via a predetermined radio resource, identifying a sequence used in transmission of the received preamble, identifying a radio resource associated with the identified sequence, and receiving the predetermined information with the identified radio resource.

13. A program **characterized by** causing a computer provided in a terminal apparatus to execute:
on the basis of a two-step random access procedure, establishing an initial connection with a base station apparatus by transmitting a first message to the base station apparatus and receiving a second message, which is a reply to the first message, from the base station apparatus,
wherein the first message includes a preamble to be transmitted using one sequence selected from a plurality of sequence candidates and predetermined information for initial access;
each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates; and
in establishing the initial connection, the program causes the terminal apparatus to, in the first message, transmit the preamble with a predetermined radio resource using the one sequence selected from the plurality of sequence candidates and transmit the predetermined information using a radio resource associated with the one selected sequence.

14. A program **characterized by** causing a computer provided in a base station apparatus to execute:
on the basis of a two-step random access procedure, establishing an initial connection with a terminal apparatus by receiving a first message from the terminal apparatus and transmitting a second message, which is a reply to the first message, to the terminal apparatus,
wherein the first message includes a preamble to be transmitted using one sequence selected from a plurality of sequence candidates by the terminal apparatus and predetermined information for initial access;
each one of the plurality of sequence candidates is associated with a radio resource to be used for transmitting the predetermined information, wherein a first radio resource associated with a first candidate of the plurality of sequence candidates is different from a second radio resource associated with a second candidate of the plurality of sequence candidates; and
in establishing the initial connection, the program causes the base station apparatus to, in the first message, receive the preamble via a predetermined radio resource, identify a sequence used in transmission of the received preamble, identify a radio resource associated with the identified sequence, and receive the predetermined information with the identified radio resource.
